(19)

Europäisches
Patentamt
European
Patent Office
Office européen
des brevets

(11) **EP 1 901 215 A1**

(12) **EUROPEAN PATENT APPLICATION**

(43) Date of publication:
**19.03.2008 Bulletin 2008/12**

(51) Int Cl.:
***G06Q 10/00*** (2006.01)

(21) Application number: **06118215.0**

(22) Date of filing: **31.07.2006**

| | |
|---|---|
| (84) Designated Contracting States: **AT BE BG CH CY CZ DE DK EE ES FI FR GB GR HU IE IS IT LI LT LU LV MC NL PL PT RO SE SI SK TR** Designated Extension States: **AL BA HR MK YU** | (72) Inventors: • **Meyer, Douglas C. Morton, IL 61550 (US)** • **Myers, Gerald L. Heyworth, IA Iowa IL 61745 (US)** |
| (71) Applicant: **Caterpillar, Inc. Peoria, IL 61629-6490 (US)** | (74) Representative: **Hatzmann, Martin VEREENIGDE Johan de Wittlaan 7 2517 JR Den Haag (NL)** |

(54) **Inventory management system and method**

(57)    Inventory management system for monitoring the inventory of items in a warehouse. A database system (2) is provided for electronically storing and maintaining stock quantities of the items in the warehouse, and a monitoring system (10) arranged to retrieve data related to the items and to determine a sample of the items in the warehouse to be counted physically. One or more remote terminals (15) are present which are arranged to receive the sample of items, display data related to each item in the received sample, receive input data representing a physical count of the item displayed, and relay the received input data to the monitoring system. A sample error is determined, from which an error may be extrapolated related to the total inventory in the warehouse.

*Fig 1*

**Description**

**Field of the invention**

The present invention relates to an inventory management system for monitoring the accuracy of inventory stock record of inventory levels (i.e. the amount, stock, quantity, supply) of a population of items (such as part numbers, articles, goods) in a warehouse, comprising a database system for electronically storing and maintaining electronic stock quantities of the population of items in the warehouse. The stock quantities may be obtained by physically counting the items when entering the warehouse, and updating the stock quantities based on orders or deliveries. In a further aspect, the present invention relates to an inventory management method for monitoring the inventory of a population of items in a warehouse, comprising electronically storing and maintaining stock quantities of the population of items in the warehouse.

**Prior art**

Such an inventory management system is e.g. known from U.S. Patent Application Publication No. US2006036498, which discloses a parts stock amount management device. The difference between incoming quantity information and outgoing quantity information in a number of logistic facilities may be determined to update actual quantities in each of the logistic facilities. Terminal computers may be used to send the quantity information to a central host computer, which consolidates the information. In this known system, the accuracy of the parts stock amount is strongly dependent on the accuracy of the incoming and outgoing quantity information. Thus, errors made in the process may propagate, potentially resulting in large errors between the electronic stock quantities and the actual quantity in a logistic facility.

A known manner of verifying inventory records is to perform an annual physical inventory count. This involves counting all part numbers and all locations in a warehouse and reconciling this back to the stock records. This method is extremely labour intensive, expensive and time consuming. In addition, it often requires the closing of a facility for several days to minimize inventory movement, thereby isolating the inventory from external changes during the physical count process. These annual physical inventory count processes may also lead to large adjustments once each year to appropriately reconcile the electronic inventory record with the actual quantities housed in the facility. These large inventory adjustments provide further indication that these annual inventory audit processes, while updating inventory records, may significantly hinder facility operations. Large adjustments may be indicative that either too many or too few parts were ordered during the course of the annual period preceding the audit, which may be indicative of potential inventory control problems. For example, if an annual audit process indicates that a quantity of a particular part number in the electronic inventory record is significantly less than the actual inventory stock, the inventory in the facility may be overstocked. This overstock may potentially increase operational (e.g., storage and handling) costs and reduce facility profitability. Alternatively, if the annual audit process indicates that a quantity of a particular part number in the electronic inventory record is significantly greater than the actual inventory stock, the inventory in the facility may be understocked, potentially resulting in reduce quality of customer service.

**Summary of the invention**

The present invention is directed toward providing an improved inventory management system, which may provide a more efficient mechanism for managing inventory stock and ensuring accurate inventory stock records, while reducing costs and operational interruptions associated with annual inventory audits.

According to the present invention, an inventory management system as defined above is provided, wherein the inventory management system further comprises a monitoring system connected to the database system, the monitoring system being arranged to retrieve data related to the population of items, and to determine a sample of the population of items in the warehouse to be counted physically (and e.g. to further determine which specific items of the sample are to be counted physically), and at least one remote terminal (such as a client computer, PDA, etc.) connectable to the monitoring system, the at least one remote terminal being arranged to receive data from the database system concerning electronic stock quantities of items in the sample, display the data from the electronic stock quantities related to each item in the sample (such as part number, warehouse location), receive input data representing a physical count of the item displayed, and relay the received input data to the monitoring system. Because only a (random) sample of items in the population is physically counted, less time is required for counting. By using a random number generator to pick which items (e.g. part numbers or bins) are part of the sample, statistical validity of the test count may be maintained. As a result it may be possible that some part numbers in a warehouse are never counted at all. The at least one remote terminal may be connectable to the monitoring system using a wireline-based (computer) network, such as an ethernet network. As an alternative, a wireless network may be used, which provides an additional advantage that the remote terminal may be taken to the warehouse location of the item to be counted.

In a further embodiment of the present invention, the monitoring system may be further arranged to calculate a difference between the stored stock quantity of an item and the input data representing a physical count of the item, and to generate a warning if the difference exceeds a predetermined threshold (e.g.+/- 5%). The warning may, for example, be sent to the at least one remote terminal, which may trigger an instant recount. Alternatively, the warning may cause future sample sizes to be increased or cause an investigation of the processes related to the item in order to identify the cause of the difference between the electronic stock quantities and the physical count.

According to one embodiment, the monitoring system may be further configured to update the database system using the received input data. This may help the database system keep the electronically stored stock quantities up to date for those specific items that are physically counted. When the count is being done, the count may be reconciled against the electronic stock quantities for the time period of the count to prevent discrepancies that may arise due to the dynamic warehouse environment.

In a further embodiment, the inventory management system may be used to provide statistical data related to the errors found when counting. In this embodiment, the monitoring system may be further arranged to determine a sample error based on the received input data, and to extrapolate from the sample error to determine an error for the total inventory in the warehouse, i.e. the entire population of items in the warehouse. The sample error may, for example, comprise the standard deviation associated with the physical counts of each item determined with respect to the stored quantity of each item in the sample. Alternatively, the sample error may include an average associated with the difference between the physical count of each item and the stored quantity associated with each corresponding item in the sample.

In yet another embodiment, the inventory management system may further comprise a reporting system connected to the monitoring system, the reporting system being arranged to receive the error, and to present the error, or a report indicative thereof, to a user.

In a further aspect, the present invention relates to an inventory management method as defined above, in which the method comprises retrieving data related to the population of items, determining a sample of the population of items in the warehouse to be counted physically, receiving data concerning electronic stock quantities related to each item in the sample, displaying the data from the electronic stock quantities related to each item in the sample, and receiving input data representing a physical count of the item displayed.

Furthermore, the method may further comprise calculating a difference between the stored stock quantity of an item and the input data representing a physical count of the item, and generating a warning if the difference exceeds a predetermined threshold. In an even further embodiment, the method further comprises updating the stock quantities using the received input data. To determine inventory statistics of the entire population in the warehouse, the method in a further embodiment comprises determining a sample error, and extrapolating from the sample error an error related to the total inventory in the warehouse.

In a further embodiment of the present method, determining the sample of the population of items in the warehouse to be counted physically comprises dividing the population of items in a plurality of strata (i.e. a group of items of the population that are related by a common characteristic such as monetary value), determining a sample size for the strata, determining from the sample size a number of counts per stratum and randomly selecting items from each stratum to obtain the sample of items to be physically counted. The random selection of part numbers assures that the sample is a valid statistical sample and is not skewed by bias or prejudice, which would invalidate the conclusions and data of the sample. The distribution of the entire population in strata, also called a stratifying process, ensures that the selected items are distributed over all strata, which prevents a specific class of items (e.g. related to value per item) to be predominantly present in the selected items. When the error for a sample considers the monetary value of each item in a sample, the use of strata also prevents skewing the results of the physical count by preventing the error of large value items from overwhelming the error of small value items. Consequently, the accuracy of the electronic stock quantities may be more accurately tracked.

In a further embodiment, dividing the population of items in a plurality of strata is based on the number of items and the value per item. This embodiment assures that a minimum percentage of the total value of items in the warehouse will be counted, and not a certain percentage of the total quantity of items. By correctly defining the strata, high value items may be selected with preference.

The sample size may in a further embodiment be determined according to:

$$n = (1.96/\text{delta})^2 * P(1\text{-}P)$$

in which n is a minimum sample size, delta is a level of precision required from the sample in %, and P is a historical level of value accuracy for net adjustment in %. E.g., in the case a level of precision of +/- 2% is used, and a historical level of value accuracy of e.g. 95%, a sample size of 456 is obtained.

As an alternative, the use of a 90% confidence rating may be applied which may be about 30 part numbers selected per strata for 5 strata. Therefore, as more or less confidence is needed, the sample size may be modified accordingly.

In an even further embodiment, the number of selected items per stratum is proportional to the percentage of volume value in that stratum. The sample size is thus divided over the strata in a manner favoring the high valued items in a warehouse.

The monitoring system of the inventory management system according to further embodiments of the present invention may be arranged to execute any one of the above mentioned method embodiments.

In an even further aspect, the present invention relates to a computer program product comprising computer executable code, which when loaded on a computer system allows the computer to execute the method according to any one of the method embodiments described above.

**Short description of drawings**

The present invention will be discussed in more detail below, using a number of exemplary embodiments, with reference to the attached drawings, in which

Fig. 1 shows a schematic block diagram of an embodiment of the inventory management system according to the present invention;
Fig. 2 shows a flow chart of a first part of the statistical test count process according to an embodiment of the present invention;
Fig. 3 shows a graph in which the distribution of part numbers, and the distribution of part numbers to be counted are given for a population of five strata; and
Fig. 4 shows a flow chart of a second part of the statistical count process according to an embodiment of the present invention.

**Detailed description of exemplary embodiments**

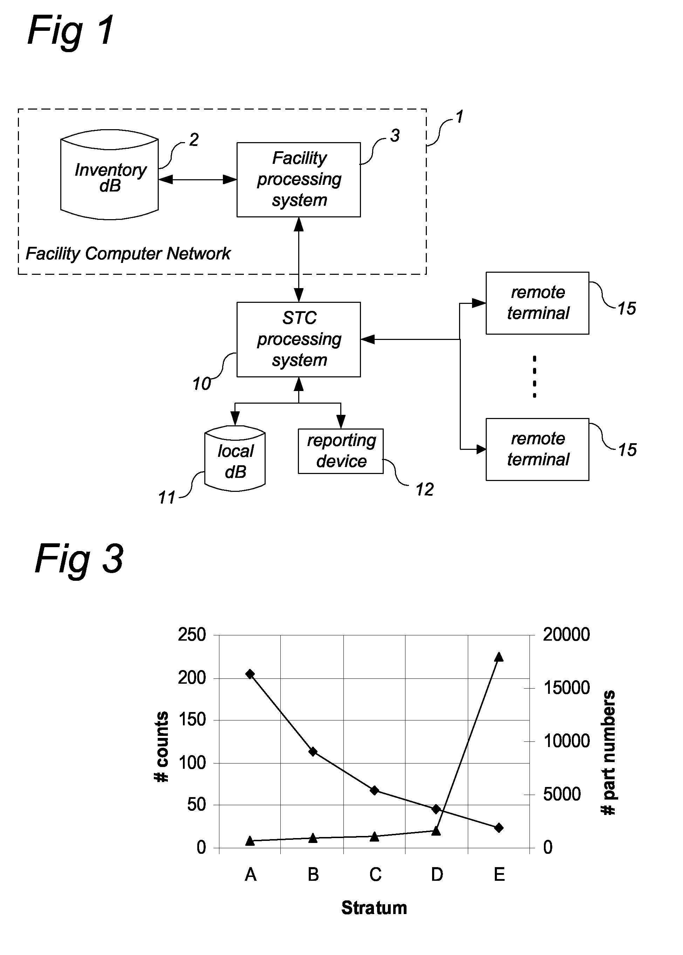

In Fig. 1, a schematic block diagram is shown of a facility computer network 1, including a facility processing system 3 connected to an inventory database 2. Many facilities have such a computer network 1, e.g. production facilities, storage facilities, distribution facilities, etc. The computer network 1 may comprise many computers, in the form of servers and/or desktop computers, and other network facilities, as known to the person skilled in the art. The inventory database 2 is predominantly used to store information with regard to the inventory of the facility, e.g. part numbers, warehouse location, actual stored quantity of a part number, value per part number, etc. In prior art systems, there already was a need to update the data stored in the inventory database 2, but due to the time and cost involved, an actual count of items in the warehouse would only be executed once a year. The facility processing system 3 was then used to update the stored inventory information in inventory database 2.

According to a first embodiment of the present invention, the counting process of physically counting every item in the warehouse is replaced by a statistical test count (STC) process. This STC process is implemented using an STC processing system 10, which is connected to the facility processing system 3 for exchange of data. The STC process is a method of continually evaluating, through selected sample counts, differences between physical quantities (in the warehouse) and stock record quantities (in the inventory database 2), thereby measuring the accuracy of stock records and assisting in satisfying inventory verification requirements. Statistical sampling techniques provide an objective basis for estimating inventory error based on the results of a random sample, and reduce the number of counts required to verify inventory.

In the embodiment shown in Fig. 1, the STC processing system 10 is further connected to a local database 11, e.g. in the form of a data storage device (magnetic, optical, semiconductor memory, etc.), and a reporting device 12. Furthermore, a number of remote terminals 15 are connected to the STC processing system 10, which may be positioned at various locations remote from the STC processing system 10, e.g. in different departments of a warehouse. The STC processing system 10 may be configured with input/output devices, such as a keyboard and display as known to the person skilled in the art, to allow an operator to influence the operation of the STC processing system 10. The remote terminals 15 may also be implemented in the form of computer systems, e.g. a desktop computer or thin client computer, which are connected to the STC processing system 10 using a network architecture as known to the person skilled in the art. For example, the connection between STC processing system 10 and remote terminals 15 may be implemented using a fixed Ethernet architecture. Alternatively, the remote terminals may be implemented using a wireless communication architecture, e.g. in the form of a WiFi network. The remote terminals 15 may then also be implemented using a portable computer, such as a laptop computer or a PDA computer.

The STC processing system 10 may be a single processor or multiprocessor computer system, which is arranged to execute computer code, which may be stored in a memory device which is part of the STC processing system 10 (e.g. the local database 11), or which is external to the STC processing system 10, e.g. in the form of a computer program stored on an optical disc or in magnetic memory. The STC processing system 10 is arranged to execute the statistical test count process, which will be described in more detail below referring to a number of embodiments.

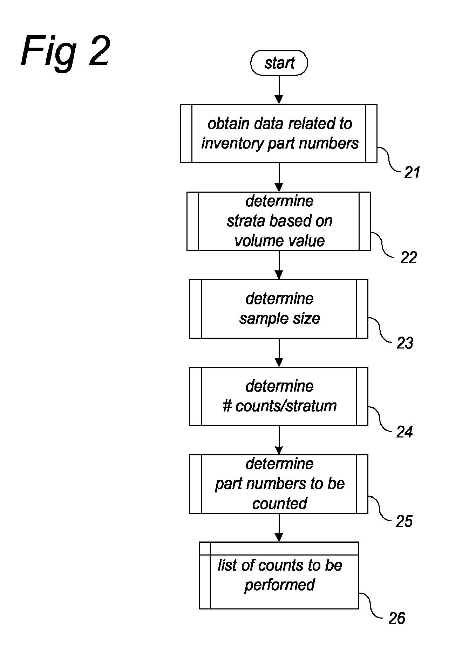

A flow chart of an embodiment of the present invention is shown in Fig. 2. In the context of the present application, an inventory or stock of items in e.g. a warehouse is assumed to comprise a large number of items, articles, products, etc, which are uniquely assigned a part number for inventory management purposes. A single part number may be associated with a single item, but also to a packaging of a plurality of items. For each part number, a monetary value may be assigned representing the value of the part number for the owner of the inventory in the warehouse.

In the inventory monitoring system of the present invention, the inventory may first be determined, i.e. the population of items that need to be monitored (step 21 in Fig. 2). For example, for a production facility, the inventory comprises all finished products ready to be shipped, but temporarily stocked in a warehouse. Each type of finished product has a unique part number. This data, also including the value of the part number and the stock amount of each part number, may be collected by the STC processing system 10 from the inventory database 2 via the facility processing system 3.

Advantageously, the population of items are stratified, i.e. divided in a number of strata, each stratum representing a percentage of the total inventory value (step 22 in Fig. 2). For example, each strata may be associated with a percentage of a total value of an entire of inventory of products. For example, strata A, containing a majority of the part numbers, may correspond to only 5% of the overall value of the inventory. On the other hand, strata D, containing a substantially smaller quantity of high-priced part numbers, may comprise 60% of the total value of the inventory. As an optional intermediate step, the inventory population is grouped into classes, each class comprising a range of cost. A number of classes may then be grouped in strata. The volume value is defined as the monetary value, i.e. the number of items times the value assigned to that item. The number of stratification categories (or strata) may vary from facility to facility, as long as there is focus on the top 95% of the volume value of the inventory. For example, in a facility with less than $200 million total inventory value the strata may be divided as follows:

Stratum 1 = 5% of total inventory value
Stratum 2 = 15% " " "
Stratum 3 = 20% " " "
Stratum 4 = 20% " " "
Stratum 5 = 40% " " "

In a facility with greater than $200 million total inventory value, the strata may be divided using a larger number of strata:

Stratum 1 = 5% of total inventory value
Stratum 2 = 5% " " "
Stratum 3 = 10% " " "
Stratum 4 = 10% " " "
Stratum 5 = 15% " " "
Stratum 6 = 15% " " "
Stratum 7 = 20% " " "
Stratum 8 = 20% " " "

In the statistical test count process, next a statistically valid sample size and number of counts to do by strata is determined (step 23, and step 24 in Fig. 2, resp.). There must be a statistically valid sample based on the number of parts in the population. The number of part numbers selected for each group or subpopulation may be determined based on the size of the population associated with the group and/or the value of the group relative to the overall value of the entire inventory. The number of part numbers selected may be predetermined or, alternatively, may be identified using any suitable sample selection algorithm for determining an appropriate statistical sample for a population. For example, the number of part numbers may be determined based on one or more of a total number of elements in the population, an historical standard deviation data associated with inventory error, or a confidence factor that may be required in the statistical test count data. According to one embodiment, processing system 10 may determine the minimum sample size, n, based on the following formula:

$$n = \left(\frac{x}{\Delta}\right)^2 \cdot P(1-P) \quad (\text{Eq. 1})$$

where x is a predetermined constant corresponding to a confidence level which may be obtained from a table (e.g., x = 1.96 for a confidence level of 95%); P corresponds to a desired confidence level (e.g., P = 0.95 for a desired confidence level of 95%); and $\Delta$ includes an acceptable standard deviation for a particular sample or element. It should be noted that one or more of the variables noted above may be dependent on one or more other variables. For instance, as standard deviation decreases corresponding to a decrease in inventory error associated with the statistical test count, a confidence factor in the test count process may increase. Accordingly, once a desired standard deviation is reached, the sample size may be reduced based on a desired confidence factor associated with the test count process.

Once a plurality of groups has been established a plurality of samples may be selected from each group. The samples may be selected at random, using any suitable type of random sample selection device. According to one embodiment, STC processing system 10 may execute a random sample selection algorithm that selects one or more part numbers from among a plurality of part numbers stored in inventory database 2. Alternatively, one or more part numbers may be randomly selected manually, by inventory management personnel.

For the value of delta, which is given in the same unit as P, a value of + or - 2% is chosen.

The value x=1.96 in the formula is a constant representing a confidence level of 95%. For other values of confidence level, this value will change.

A sample size calculation with the above given figures yields a sample size of:

$$(1.96/.02)^2 * 0.95 * (1-0.95) = 456$$

This calculation is good for facilities with more than 9120 parts in the population. If a plant has 9120 or fewer part numbers in the population, the following calculation should be done to adjust the sample size for small populations:

$$\text{Sample size for small populations} = 456 / (1 + 456 / \text{population})$$

$$\text{An example for a population of 1000 part numbers} = 456 / (1 + 456 / 1000) = 313.$$

In an alternative embodiment, the STC processing system 10 is arranged for determining the sample size (step 23) by using a lookup table, which may e.g. be stored in the local database 11. An example of such a lookup table is given below:

| Sample size lookup table | |
| --- | --- |
| **Number of Parts in Population** | **Sample Size** |
| 50 | 45 |
| 100 | 82 |
| 200 | 139 |
| 500 | 238 |
| 750 | 284 |
| 1000 | 313 |
| 2000 | 371 |
| 3000 | 396 |
| 4000 | 409 |

(continued)

| Sample size lookup table | |
|---|---|
| **Number of Parts in Population** | **Sample Size** |
| 5000 | 418 |
| 6000 | 424 |
| 7000 | 428 |
| 8000 | 431 |
| 9000 | 434 |
| >9120 | 456 |

As a further alternative, a confidence rating of 90% may be used, which extrapolates to 30 part numbers per stratum. When more confidence is needed, a larger sample size may be taken.

The number of counts to do per stratum is determined in step 24 in Fig. 2, using a stratified random sampling. The number of counts to do by strata is proportional to the percentage of volume value in that stratum, as determined in step 22 described above.

The number of physical counts to be performed for each part number may be determined. The number of physical counts may be based on the sample size and the percent value associated with a particular strata respective of the value of the entire inventory. For example, STC processing system 10 may execute a count determination algorithm that calculates the number of counts using the expression:

$$y = n \cdot v \ (\text{Eq. 2})$$

where y is the number of counts to be performed; n is the minimum sample size which may be determined using Eq. 1; and v corresponds to the percent value of the particular strata relative to the value of the entire inventory.

A statistical test count may be performed based on the number of samples and the number of counts. The statistical test count may include a physical count of each selected sample and may be repeated "y" times. Because the number of counts to be performed, y, is based on the confidence factor and historical accuracy of previous statistical test counts, those skilled in the art will recognize that the number of counts may be directly proportional to the desired confidence factor associated with the test count.

The physical count portion of the statistical test count may be performed manually by one or more inventory management personnel. Alternatively, the physical count may include a semi-automated process whereby barcodes affixed to each product may be scanned using optical scanning devices or other handheld scanning instruments. The scanned data may be uploaded to STC processing system 10, which may automatically sort and count the scanned data to produce physical count data.

If the calculation returns a number of counts that is greater than the part numbers in a stratum, the entire stratum is counted and the difference is carried forward to and counted in the next stratum.

Two examples are given in the tables below:

| Example A with 5 strata: | | | |
|---|---|---|---|
| Stratum | Stratification % of volume value | Number of part numbers | Number of counts |
| A | 45% | 696 | 205 |
| B | 25% | 1,013 | 114 |
| C | 15% | 1,092 | 68 |
| D | 10% | 1,624 | 46 |
| E | 5% | 18,000 | 23 |
| **Total** | **100%** | **22,425** | **456** |

| Example B with 2 strata: | | | |
|---|---|---|---|
| Stratum | Stratification % of volume value | Number of part numbers | Number of counts |
| A | 95% | 4,425 | 433 |
| B | 5% | 18,000 | 23 |
| **Total** | **100%** | **22,425** | **456** |

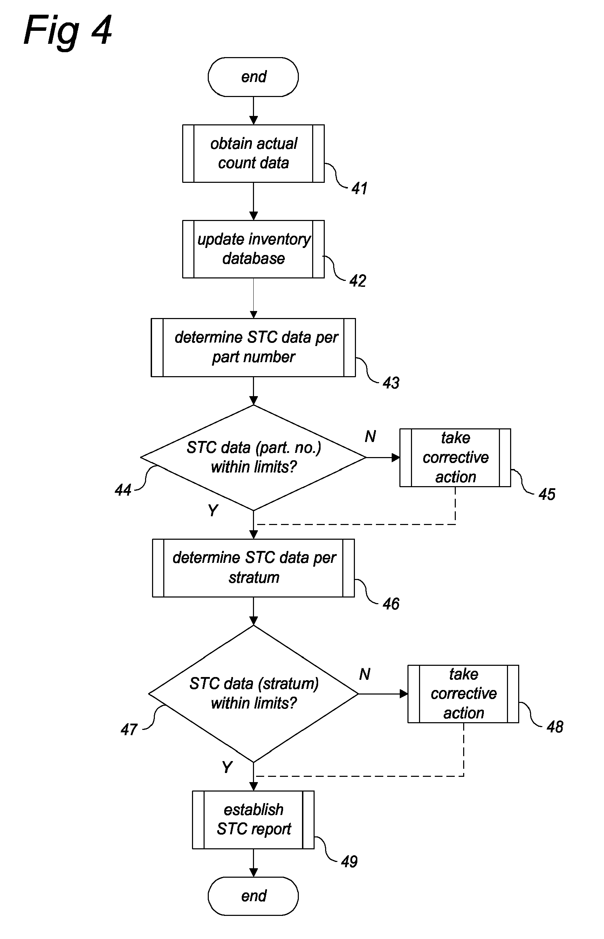

Example A will allow more emphasis to be given to higher value parts. This is made clear in the graph of Fig. 3, which shows the number of part numbers in each stratum (triangles, axis on the right) and the number of counts per stratum (diamonds, axis on left). It is clear that the highest number of counts is assigned to stratum A, which represents the highest value part numbers in the inventory, while in stratum E, only a limited number of part numbers is counted, which represent much lower valued part numbers in the inventory.

Once the sample size for each stratum is determined, the STC processing system 10 determines the number of counts for each stratum as earlier defined (step 25 in Fig. 2). The approach used is called stratified random sampling. The part numbers to be counted in each stratum are selected randomly. Random sampling means that each part number has an equal chance of being selected regardless of what other part numbers have or will be selected. This part of the process will result in a list of part numbers to be counted in the warehouse (as indicated by output 26 of the flow chart of Fig. 2). The list only comprises a part of all part numbers, and hence, the counting process will take much less effort (time and money) to complete than an annual complete inventory count.

In the above embodiment, the random selection of part numbers in a stratum ensures that a representative sample of the inventory is counted. The stratifying process (defining the strata, step 22) of the inventory ensures that the sample actually counted is not skewed towards any specific value range of the part numbers in the inventory.

The list 26 of part numbers to be counted may be stored in the local database 11. The entire list 26, or a specific part thereof, can now be sent to one of the remote terminals 15, such that the counting task may be performed in the warehouse (or at any other suitable location). The remote terminal 15 may be arranged to receive the (partial) list 26, and to display the part numbers (an optionally the warehouse locations) to be counted. The remote terminal 15 is also arranged to receive input, i.e. the actual count number of a particular part number.

In a further embodiment, the counting for a complete facility may be executed one stratum at a time, distributed over a longer period of time (e.g. one stratum per week). In this manner, less effort is needed at a single moment in time, and the total counting process may be incorporated in a more or less routine fashion.

Once the actual counting process has been completed, the remote terminal 15 may once again be connected to the STC processing system 10, after which the count data is transferred from the remote terminal 15 to the STC processing system 10. As an alternative, the remote terminal 15 is always connected to the STC processing system 10 (e.g. using a wireless network), in which case count data is transferred directly after being input to the remote terminal 15. This is indicated schematically in step 41 of the flow chart of Fig. 4.

Once the count data is received by the STC processing system 10, this count data is used to update the inventory database 2 as indicated by reference numeral 42 in the flow chart of Fig. 1. This may be implemented via the facility processing system 3 (see embodiment of Fig. 1), or the STC processing system 10 may directly update the inventory database 2. This reconciliation of the stock record in the inventory database 2 is the basis for the error extrapolation and performance measurements as discussed below.

In step 43 of the flow chart of Fig. 4, the STC processing system 10 determines STC data per part number. The STC data to be calculated may comprise the count error between the amount stored previously in the inventory database and the physical count. Furthermore, the STC data per part number comprises the net value of adjustment, i.e. the delta in count of the part number times the value of the part number. The STC data may then be stored in the local database 11, for further processing. For example, once a physical count has been performed, an inventory error may be identified. Inventory error, as the term is used herein, refers to an amount by which a physical count data differs from inventory record data for each of the plurality of selected part numbers. The inventory error may be reflected as a difference (e.g., deficit or surplus) between the actual quantity and the inventory record for a particular part number. For example, if the actual quantity of part number "X" determined by a physical count is 13 units, while the inventory record indicates that there are 15 units, the software may assign an inventory error of -2 to part number "X". Alternatively, inventory error may be expressed as a variance, a standard deviation, or other suitable statistical representation indicative of a discrepancy between physical count data and data reflected in the inventory record. Although inventory error is described in connection with a quantity discrepancy between physical count data and inventory record data, it is contemplated that inventory error may also be expressed as a monetary value discrepancy.

The further processing may in an embodiment of the present invention include the test if the obtained STC data is within limits (decision block 44 in Fig. 4). For example, the inventory error may be compared with a predetermined error range. The predetermined error range may correspond to a range of inventory error that, when exceeded, may be indicative of inventory error that exceeds an acceptable range of fluctuation. If one of the STC data for a part number is outside predetermined limits (e.g. the physical count is more than 5% off from the stored amount for that part number), corrective action may be taken (step 45 in Fig. 4). E.g., the STC processing system 10 may in this case generate a warning message and send it to the remote terminal 15. In one specific embodiment, the count, which was outside limits, may be executed once again shortly after the original count, to make sure that no mistake was made during the physical count. In a further embodiment, the count is executed again, but at a later point in time, and by a different counter. Alternatively, if, upon comparison, the inventory error is within the predetermined error range, the inventory record may be updated, without requiring an inventory error analysis.

When the error for a particular part number, or group of part numbers, exceeds a predetermined threshold, the specific part number (group of part numbers) is identified for further study into the cause of the error. This permits small sub portions of the warehouse population to be identified and studied for process improvements and for identifying problems that are not adequately accounted for. Additionally, any outliers in the part numbers that are found can be identified for further study. For example, a part number may be counted that results in a statistical outlier. This outlier upon further study may be a result of a supplier that packs four parts in a package. Upon reception, personnel of the facility may count the package as one item, but when one item out of the package is removed from the package and shipped, the inventory database 2 would show no items remaining for this part number, while actually three parts remain. When a sample for the STC process comprises such a part number, this part number would be identified as an outlier and flagged for further study, because a large number of parts are counted when none should be in stock. When analysis shows that the inventory process failed to take the packaging method of this supplier into account, all part numbers supplied by this supplier may be identified and checked for errors.

Alternatively and/or additionally, if the inventory error does not lie within the predetermined error range, historical error data may be analyzed to determine a historical accuracy of the statistical test count process. For example, STC processing system 10 may analyze historical statistical test count data to compare inventory error data, confidence factors, and sample sizes, to adjust a sample size associated with the inventory management process. In one embodiment, STC processing system 10 may determine that previous statistical test counts were based on sample sizes determined with a 90% confidence factor. Over time, the cumulative historical accuracy declined until the inventory error exceeded the predetermined error range. As a result, system 110 may adjust the minimum sample size by adjusting a confidence factor associated with the sample size algorithm (i.e., Eq. 1) until the inventory error and/or cumulative historical data conforms to the predetermined error range.

Furthermore, the STC processing system 10 is arranged to further determine STC data related to the strata (step 46 in Fig. 4). For each stratum, the physical counts, net adjustment, and gross adjustment for all part numbers in the stratum are determined, as well as the related percentages. Also, the totals for all strata are being determined in this step 46. The net adjustment percentage is determined as being the value adjustment of the sample (sign considered) divided by the total value of the inventory counted. The gross adjustment percentage is determined as being the value adjustment of the sample (sign ignored) divided by the total value of the inventory counted. The adjustment of the sample and value of the inventory counted is in (or translated into) monetary value.

Again, the STC data obtained may be checked against predetermined limits (decision block 47 in Fig. 4), and when one or more of the STC data are outside the defined limits, corrective action may be taken (block 48 in Fig. 4). Accuracy targets for net adjustment may be 1.5%% of the value counted, and for gross adjustment the accuracy target may be 5% or even 8%. Again, the corrective action may involve the execution of recounts, e.g. limited to a specific stratum or warehouse part where the largest errors have occurred.

According to one embodiment, the corrective action may involve raising the desired confidence level for the next counting round of that facility. The sample size as calculated in step 23 of the flow chart of Fig. 2 is increased when raising the desired confidence level from e.g. 90% to 95%. If no improvement is measured, the desired confidence level may even be raised from 95% to 98% for the then next count. If an improvement is measured, or when the results are within the limits, the desired confidence level may again be lowered to a 95% or even 90%. E.g., after at least four data points are gathered and the error is outside of the threshold, the sample size will be adjusted to more accurately determine the problems that have arisen and to compensate for a huge standard deviation. A huge standard deviation prevents the tool from working effectively. Consequently, by increasing the confidence rating it is possible to avoid the problems associated with outliers skewing the data and the results.

Also, other remedial efforts may be made, including but not limited to focused cycle counts, location auditing, improved reconciliation processes, improved receiving processes and corrective action for repeated errors. These remedial efforts will assist a facility in identifying the causes of inaccuracies, as well as taking action to eliminate the errors. As an exemplary embodiment, the corrective action may comprise a new STC process of a more limited sample size at a later moment in time, of which the results may be used to analyze whether any effect is measurable of remedial efforts underway. This assists in identifying the effects of the remedial efforts and if other efforts need to begin to bring the facility within the set limits.

Finally, in the embodiment of the flow chart of Fig. 4, an STC report is generated in block 49, which may be used for management purposes, but also for accounting purposes. The performance measurements included in the STC report are a key indicator of the health of the record accuracy of the facility and are the basis for the test count process the following year. A facility with acceptable performance measurements, will either maintain or decrease the number of test counts to be performed the following year. Whereas, a facility that has poor measures, may well experience an increase in the number of test counts to be performed in the following year. In other words, the Statistical Test Count Process according to the various embodiments described above has a built in self-correcting feature that responds to results that are in or out of tolerance. In addition to increasing the quantity of test counts the following year, the remedial efforts discussed above may begin to identify the root cause of the record inaccuracies that exist at an out of tolerance facility.

A feature of the Statistical Test Count Process according to a further embodiment of the present invention is control over the data. For example, access to the test count process is limited. Also, items of a sample, once selected, cannot be deleted or unselected. This avoids the possibility of a facility 'cherry picking' part numbers to achieve the best results by eliminating any part numbers that result in large adjustments. Test count part numbers can be replaced only for legitimate reasons, such as the scrapping of obsolete inventory.

The annual physical inventory of prior art methods also often led to large adjustments once each year to correct the inventory values. Whether the adjustment was plus or minus, the overall effect was negative for the entity. A large plus adjustment indicates that the inventory levels have been understated during the year which may have led to an over purchase of inventory. A large minus adjustment indicates that inventory levels have been overstated during the year, which leaves the entity at risk of poor service levels. The STC process of the present invention may be used in conjunction with ongoing inventory verification efforts. Thus, a year-end 'surprise' is avoided as inventory discrepancies are corrected as they occur. This provides more accuracy, better service levels and a decrease in inventory levels.

**Claims**

1. Inventory management system for monitoring the accuracy of inventory stock records of inventory levels of a population of items in a warehouse, comprising:

   a database system (2) for electronically storing and maintaining stock quantities of the population of items in the warehouse,
   a monitoring system (10) connected to the database system (2), the monitoring system being arranged to retrieve data related to the population of items, and to determine a sample of the population of items in the warehouse to be counted physically,
   and at least one remote terminal (15) connectable to the monitoring system (10), the at least one remote terminal (15) being arranged to receive data from the database system concerning electronic stock quantities related to each item in the sample, display the data from the electronic stock quantities related to each item in the sample, receive input data representing a physical count of the item displayed, and relay the received input data to the monitoring system.

2. Inventory management system according to claim 1, in which the monitoring system is further arranged to calculate a difference between the stored stock quantity of an item and the input data representing a physical count of the item, and to generate a warning if the difference exceeds a predetermined threshold.

3. Inventory management system according to claim 1 or 2, in which the monitoring system is further arranged to update the database system (2) using the received input data.

4. Inventory management system according to claim 1, 2 or 3, in which the monitoring system is further arranged to determine a sample error based on the received input data, and to extrapolate from the sample error to determine an error for the total inventory in the warehouse.

5. Inventory management system according to any one of claim 1-4, further comprising a reporting system (12) connected to the monitoring system (10), the reporting system being arranged to receive the error, and to present the error.

6. Inventory management method for monitoring the inventory of a population of items in a warehouse, comprising electronically storing and maintaining stock quantities of the population of items in the warehouse;

retrieving data related to the population of items;
determining a sample of the population of items in the warehouse to be counted physically;
receiving data concerning electronic stock quantities related to each item in the sample; displaying the data from the electronic stock quantities related to each item in the sample; and
receiving input data representing a physical count of the item displayed.

7. Inventory management method according to claim 6, further comprising calculating a difference between the stored stock quantity of an item and the input data representing a physical count of the item, and
generating a warning if the difference exceeds a predetermined threshold.

8. Inventory management method according to claim 6 or 7, further comprising updating the stock quantities using the received input data.

9. Inventory management method according to claim 6, 7 or 8, the method further comprising
determining a sample error;
extrapolating from the sample error an error related to the total inventory in the warehouse.

10. Inventory management method according to any one of claims 6-9,
in which determining the sample of the population of items in the warehouse to be counted physically comprises:

   dividing the population of items in a plurality of strata;
   determining a sample size for the strata;
   determining from the sample size a number of counts per stratum;
   randomly selecting items from each stratum to obtain the sample of the population of items.

11. Inventory management method according to claim 10, in which dividing the population of items in a plurality of strata is based on the number of items and the value per item.

12. Inventory management method according to claim 10 or 11, in which the sample size is determined according to:

$$n = (1.96/\text{delta})^2 * P(1\text{-}P)$$

in which n is a minimum sample size, delta is a level of precision required from the sample in %, and P is a historical level of value accuracy for net adjustment in %.

13. Inventory management method according to claim 10, 11 or 12, in which the number of selected items per stratum is proportional to the percentage of volume value in that stratum.

14. Inventory management system according to any one of claim 1-5, in which the monitoring system (10) is further arranged to execute the method according to any one of claims 10-13.

15. Computer program product comprising computer executable code, which when loaded on a computer system allows the computer to execute the method according to any one of claims 6-13.

# Fig 1

# Fig 3

# Fig 2

start

obtain data related to
inventory part numbers
_21

determine
strata based on
volume value
_22

determine
sample size
_23

determine
# counts/stratum
_24

determine
part numbers to be
counted
_25

list of counts to be
performed
_26

# Fig 4

```
              ( end )
                 |
                 v
       +-------------------+
       | obtain actual     |
       | count data        |  41
       +-------------------+
                 |
                 v
       +-------------------+
       | update inventory  |
       | database          |  42
       +-------------------+
                 |
                 v
       +-------------------+
       | determine STC data per |
       | part number       |  43
       +-------------------+
                 |
                 v
          < STC data (part. no.)      N    +-------------+
            within limits? >  ----------->  | take        |
          44                               | corrective  |
                 | Y                       | action      |  45
                 v                         +-------------+
       +-------------------+
       | determine STC data per |
       | stratum           |  46
       +-------------------+
                 |
                 v
          < STC data (stratum)        N    +-------------+
            within limits? >  ----------->  | take        |
          47                               | corrective  |
                 | Y                       | action      |  48
                 v                         +-------------+
       +-------------------+
       | establish         |
       | STC report        |  49
       +-------------------+
                 |
                 v
              ( end )
```

## EUROPEAN SEARCH REPORT

**European Patent Office**

| Application Number |
| --- |
| EP 06 11 8215 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2004/024661 A1 (FREEL THOMAS M [US] ET AL) 5 February 2004 (2004-02-05) * abstract * * page 1, paragraphs 3,7,8 * * page 2, paragraphs 31,34,35 * * page 3, paragraphs 40,43,44,50 * * page 5, paragraph 67 * * page 6, paragraphs 85,86 * * page 7, paragraphs 102,103,108,113 * * page 9, paragraph 144 * * figure 1 * | 1-15 | INV. G06Q10/00 |
| X | US 2005/108324 A1 (STRITZINGER DAVID [US] ET AL) 19 May 2005 (2005-05-19) * abstract * * page 1, paragraphs 1,8,9 * * page 1, paragraph 16 - page 2, paragraph 19 * * page 2, paragraphs 21,25 * * page 3, paragraphs 28,29,31,34 * * page 6, paragraph 62 * * page 7, paragraph 75 * * figure 1 * | 1-15 | |
| | | | **TECHNICAL FIELDS SEARCHED (IPC)** G06Q |
| X | US 2005/233767 A1 (AYYEPPEN SRIRAMA [US] ET AL) 20 October 2005 (2005-10-20) * abstract * * page 1, paragraphs 3,8,9 * * page 2, paragraphs 62,63 * * page 3, paragraphs 67,69,71,72 * * page 4, paragraphs 96,97 * * page 5, paragraph 101 * * figure 1 * | 1-15 | |

-/--

The present search report has been drawn up for all claims

| Place of search | Date of completion of the search | Examiner |
| --- | --- | --- |
| The Hague | 14 November 2006 | Rossier, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 11 8215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 733 985 A (HENLID LTD [GB]) 25 September 1996 (1996-09-25) * abstract * * column 1, line 5 - line 11 * * column 2, line 14 - line 20 * * column 3, line 33 - line 35 * * column 4, line 55 - column 5, line 11 * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 14 November 2006 | Rossier, Thomas |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

**ANNEX TO THE EUROPEAN SEARCH REPORT
ON EUROPEAN PATENT APPLICATION NO.**

EP 06 11 8215

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2006

| Patent document cited in search report | | Publication date | Patent family member(s) | | Publication date |
|---|---|---|---|---|---|
| US 2004024661 | A1 | 05-02-2004 | AU<br>EP<br>JP<br>WO | 2003259250 A1<br>1525545 A1<br>2005535036 T<br>2004013795 A2 | 23-02-2004<br>27-04-2005<br>17-11-2005<br>12-02-2004 |
| US 2005108324 | A1 | 19-05-2005 | AU<br>CA<br>EP<br>WO | 2004288566 A1<br>2544433 A1<br>1685461 A2<br>2005045622 A2 | 19-05-2005<br>19-05-2005<br>02-08-2006<br>19-05-2005 |
| US 2005233767 | A1 | 20-10-2005 | NONE | | |
| EP 0733985 | A | 25-09-1996 | NONE | | |

EPO FORM P0459

**EP 1 901 215 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006036498 A